# EUROPEAN PATENT APPLICATION

(11) **EP 4 674 677 A1**
(43) Date of publication of application: **07.01.2026**
(21) Application number: 24194511.2
(22) Date of filing: 14.08.2024
(51) Int. Cl.: B60L 53/30, B60L 53/65, B60L 53/62, B60L 53/68

(54) **AC CHARGING SYSTEM AND AC CHARGING METHOD FOR ELECTRIC VEHICLE AND CHARGING STATION**

(30) Priority: 01.07.2024 TW 113124525
(71) Applicant: Wistron Corporation, New Taipei City 22181 (TW)
(72) Inventor: HUANG, Cheng-Wei, 22181 New Taipei City (TW)
(74) Representative: Becker, Eberhard

(57) **Abstract**

An AC charging system and an AC charging method for an electric vehicle and a charging station are provided. The AC charging method includes the following. It is detected, by the charging station, whether a first connector of the charging station is connected to a plug of the electric vehicle, and a pulse-width modulation signal is transmitted by the charging station to the electric vehicle through the first connector in response to the first connector being connected to the plug. The first pulse-width modulation signal is detected by the electric vehicle to obtain a duty cycle. The electric vehicle is charged by the charging station through the first connector based on the duty cycle matching with the first pulse-width modulation signal.

## Description

### BACKGROUND

### Technical Field

The disclosure relates to a battery charging method, and more particularly, to an alternating current (AC) charging system and an AC charging method for an electric vehicle and a charging station.

### Description of Related Art

With the popularity of an electric vehicle (EV), more and more parking spaces have been equipped with charging stations. Activation methods of the charging stations launched by different manufacturers may be different. For example, some charging stations require users to operate their mobile phones to scan a corresponding 2D barcode for activation, while other charging stations require scanning radio frequency components (e.g., proximity cards or mobile phones) for activation. The above activation methods for the charging stations are not convenient for the users. Therefore, how to provide a convenient charging method for the electric vehicle is one of the important issues in the art.

### SUMMARY

The disclosure provides an AC charging system and an AC charging method for an electric vehicle and a charging station, which may automatically charge the electric vehicle connected to the charging station.

An AC charging system for an electric vehicle in the disclosure includes a charging station and an electric vehicle. The charging station includes a first connector. The electric vehicle includes a plug. The charging station detects whether the first connector is connected to the plug, and transmits a first pulse-width modulation signal to the electric vehicle through the first connector in response to the first connector being connected to the plug. The electric vehicle detects the first pulse-width modulation signal to obtain a duty cycle. The charging station charges the electric vehicle through the first connector based on the duty cycle matching with the first pulse-width modulation signal.

In an embodiment of the disclosure, the AC charging system further includes a cloud server. The cloud server is communicatively connected to the electric vehicle and the charging station. The electric vehicle uploads the duty cycle to the cloud server. The cloud server transmits a command to the charging station in response to the duty cycle matching with the first pulse-width modulation signal. The charging station charges the electric vehicle through the first connector according to the command.

In an embodiment of the disclosure, the cloud server communicates with the electric vehicle in response to the duty cycle matching with the first pulse-width modulation signal to perform identity verification on the electric vehicle. The cloud server transmits the command to the charging station in response to the identity verification being successful.

In an embodiment of the disclosure, the electric vehicle communicates with the cloud server through a mobile device.

In an embodiment of the disclosure, the charging station broadcasts a wireless signal associated with the first pulse-width modulation signal. The electric vehicle determines that the duty cycle matches with the first pulse-width modulation signal according to the wireless signal to be communicatively connected to the charging station accordingly. In response to the electric vehicle being communicatively connected to the charging station, the charging station charges the electric vehicle through the first connector.

In an embodiment of the disclosure, in response to the electric vehicle being communicatively connected to the charging station, the charging station performs identity verification on the electric vehicle. In response to the identity verification being successful, the charging station charges the electric vehicle.

In an embodiment of the disclosure, the electric vehicle communicates with the charging station through a mobile device.

In an embodiment of the disclosure, the charging station further includes a second connector. The charging station transmits a second pulse-width modulation signal different from the first pulse-width modulation signal through the second connector.

In an embodiment of the disclosure, the charging station transmits a third pulse-width modulation signal to the electric vehicle through the first connector to charge the electric vehicle. The third pulse-width modulation signal is different from the first pulse-width modulation signal.

In an embodiment of the disclosure, the first connector includes a control pilot pin for transmitting a pulse-width modulation signal.

An AC charging method for an electric vehicle in the disclosure includes the following. It is detected, by a charging station, whether a first connector of the charging station is connected to a plug of the electric vehicle, and a first pulse-width modulation signal is transmitted by the charging station to the electric vehicle through the first connector in response to the first connector being connected to the plug. The first pulse-width modulation signal is detected by the electric vehicle to obtain a duty cycle. The electric vehicle is charged by the charging station through the first connector based on the duty cycle matching with the first pulse-width modulation signal.

In an embodiment of the disclosure, charging, by the charging station, the electric vehicle through the first connector based on the duty cycle matching with the first pulse-width modulation signal includes the following. The duty cycle is uploaded by the electric vehicle to a cloud server. A command is transmitted by the cloud server to the charging station in response to the duty cycle matching with the first pulse-width modulation signal. The electric vehicle is charged by the charging station through the first connector according to the command.

In an embodiment of the disclosure, transmitting, by the cloud server, the command to the charging station in response to the duty cycle matching with the first pulse-width modulation signal includes the following. The cloud server communicates with the electric vehicle in response to the duty cycle matching with the first pulse-width modulation signal to perform identity verification on the electric vehicle. The command is transmitted by the cloud server to the charging station in response to the identity verification being successful.

In an embodiment of the disclosure, the AC charging method further includes the following. The electric vehicle communicates with the cloud server through a mobile device.

In an embodiment of the disclosure, charging, by the charging station, the electric vehicle through the first connector based on the duty cycle matching with the first pulse-width modulation signal includes the following. A wireless signal associated with the first pulse-width modulation signal is broadcast by the charging station. It is determined, by the electric vehicle, that the duty cycle matches with the first pulse-width modulation signal according to the wireless signal to be communicatively connected to the charging station accordingly. In response to the electric vehicle being communicatively connected to the charging station, the electric vehicle is charged by the charging station through the first connector.

In an embodiment of the disclosure, in response to the electric vehicle being communicatively connected to the charging station, charging, by the charging station, the electric vehicle through the first connector includes the following. In response to the electric vehicle being communicatively connected to the charging station, identity verification on the electric vehicle is performed by the charging station. In response to the identity verification being successful, the electric vehicle is charged by the charging station.

In an embodiment of the disclosure, the AC charging method further includes the following. A second pulse-width modulation signal different from the first pulse-width modulation signal is transmitted by the charging station through a second connector of the charging station.

In an embodiment of the disclosure, charging, by the charging station, the electric vehicle through the first connector based on the duty cycle matching with the first pulse-width modulation signal includes the following. A third pulse-width modulation signal is transmitted by the charging station to the electric vehicle through the first connector to charge the electric vehicle. The third pulse-width modulation signal is different from the first pulse-width modulation signal.

In an embodiment of the disclosure, the first connector includes a control pilot pin for transmitting a pulse-width modulation signal.

A charging station in the disclosure includes a controller and a first connector. The first connector is coupled to the controller. The controller detects whether the first connector is connected to a plug of an electric vehicle, and transmits a first pulse-width modulation signal to the electric vehicle through the first connector in response to the first connector being connected to the plug. The controller receives a command to determine that a duty cycle matches with the first pulse-width modulation signal, and charges the electric vehicle through the first connector based on the duty cycle and the first pulse-width modulation signal.

Based on the above, the electric vehicle in the disclosure may detect the duty cycle of the pulse-width modulation (PWM) signal output by the charging station. The AC charging system may determine the connector of the charging station that is required to be activated based on a detection result of the electric vehicle, so that the charging station automatically charges the electric vehicle through the connector.

### BRIEF DESCRIPTION OF THE DRAWINGS

FIG. 1 is a schematic view of an AC charging system for an electric vehicle according to an embodiment of the disclosure.
FIG. 2 is a flow chart of an AC charging method for an electric vehicle according to an embodiment of the disclosure.
FIG. 3 is a flow chart of another AC charging method for an electric vehicle according to an embodiment of the disclosure.

### DETAILED DESCRIPTION OF DISCLOSED EMBODIMENTS

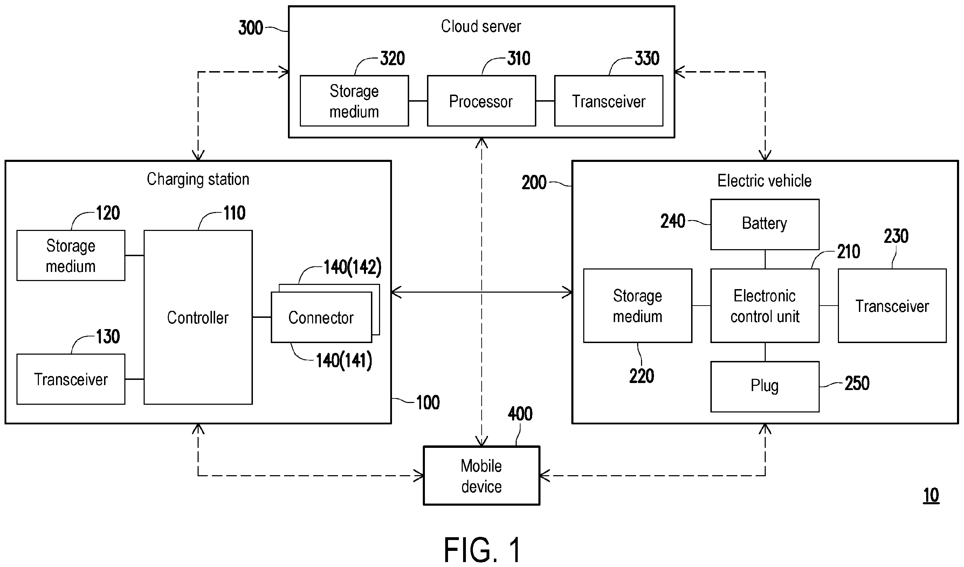

FIG. 1 is a schematic view of an AC charging system 10 for an electric vehicle according to an embodiment of the disclosure. The AC charging system 10 may include a charging station 100. In an embodiment, the AC charging system 10 may further include an electric vehicle 200.

The charging station 100 is, for example, an electric vehicle supply equipment (EVSE). The charging station 100 may include a controller 110, a storage medium 120, a transceiver 130, and one or more connectors 140. The connector 140 includes a connector 141 and a connector 142, for example.

The controller 110 is, for example, a central processing unit (CPU), other programmable general-purpose or special-purpose micro control units (MCU), microprocessors, digital signal processors (DSP), programmable controllers, application specific integrated circuits (ASIC), graphics processing units (GPU), image signal processors (ISP), image processing units (IPU), arithmetic logic units (ALU), complex programmable logic devices (CPLD), field programmable gate arrays (FPGA), or other similar elements or a combination of the above elements. The controller 110 may be coupled to the storage medium 120, the transceiver 130, and the connectors 140, and access and execute multiple modules and various applications stored in the storage medium 120.

The storage medium 120 is, for example, any type of fixed or removable random access memory (RAM), read-only memory (ROM), flash memory, hard disk drive (HDD), solid state drive (SSD), or similar elements or a combination of the above elements, and is used to store the modules or various applications that may be executed by the controller 110.

The transceiver 130 transmits or receives signals in a wireless or wired manner. The transceiver 130 may further perform operations such as low noise amplification, impedance matching, frequency mixing, upward or downward frequency conversion, filtering, amplification, and similar operations. Communication protocols supported by the transceiver 130 may include, but are not limited to, mobile networks (e.g., 4G or 5G), Wi-Fi, or Bluetooth. The controller 110 may be communicatively connected to the electric vehicle 200, a cloud server 300, or a mobile device 400 through the transceiver 130.

The controller 110 may output an AC current through the connectors 140. The connector 140 may include a control pilot (CP) pin for transmitting a PWM signal. For example, the connector 140 may include a line 1 (L1) pin, a neutral line (N) pin, the control pilot (CP) pin, a proximity pilot (PP) pin, and a SAE J1772 connector of a protective earthing (PE) pin.

The electric vehicle 200 may include an electronic control unit (ECU) 210, a storage medium 220, a transceiver 230, a battery 240, and a plug 250.

The ECU 210 is, for example, a CPU, other programmable general-purpose or special-purpose MCU, microprocessors, DSP, programmable controllers, ASIC, GPU, ISP, IPU, ALU, CPLD, FPGA, or other similar elements or a combination of the above elements. The ECU 210 may be coupled to the storage medium 220, the transceiver 230, the battery 240, and the plug 250, and access and execute multiple modules and various applications stored in the storage medium 220.

The storage medium 220 is, for example, any type of fixed or removable RAM, ROM, flash memory, HDD, SSD, or similar elements or a combination of the above elements, and is used to store the modules or various applications that may be executed by the ECU 210.

The transceiver 230 transmits or receives signals in a wireless or wired manner. The transceiver 230 may further perform operations such as low noise amplification, impedance matching, frequency mixing, upward or downward frequency conversion, filtering, amplification, and similar operations. Communication protocols supported by the transceiver 230 may include, but are not limited to, mobile networks, Wi-Fi, or Bluetooth. The ECU 210 may be communicatively connected to the charging station 100, the cloud server 300, or the mobile device 400 through the transceiver 230.

The plug 250 may be used to be electrically coupled to the connector 140 and the battery 240. After the connector 140 is inserted into the plug 250, the charging station 100 may charge the battery 240 through the connector 140. The plug 250 may support a connector for outputting the AC current. For example, the plug 250 may support the SAE J1772 connector.

In an embodiment, the AC charging system 10 may further include the cloud server 300. The cloud server 300 may include a processor 310, a storage medium 320, and a transceiver 330. In an embodiment, the electric vehicle 200 or the mobile device 400 may communicate with the charging station 100 through the cloud server 300.

The processor 310 is, for example, a CPU, other programmable general-purpose or special-purpose MCU, microprocessors, DSP, programmable controllers, ASIC, GPU, ISP, IPU, ALU, CPLD, FPGA, or other similar elements or a combination of the above elements. The processor 310 may be coupled to the storage medium 320 and the transceiver 330, and access and execute multiple modules and various applications stored in the storage medium 320.

The storage medium 320 is, for example, any type of fixed or removable RAM, ROM, flash memory, HDD, SSD, or similar elements or a combination of the above elements, and is used to store the modules or various applications that may be executed by the processor 310.

The transceiver 330 transmits or receives signals in a wireless or wired manner. The transceiver 330 may further perform operations such as low noise amplification, impedance matching, frequency mixing, upward or downward frequency conversion, filtering, amplification, and similar operations. Communication protocols supported by the transceiver 330 may include, but are not limited to, mobile networks or Wi-Fi. The processor 310 may be communicatively connected to the charging station 100, the electric vehicle 200, or the mobile device 400 through the transceiver 330.

In an embodiment, the AC charging system 10 may further include the mobile device 400. The mobile device 400 may include, but is not limited to, a wireless communication device with computation capabilities such as a tablet computer or a smartphone. In an embodiment, the electric vehicle 200 may communicate with the charging station 100 or the cloud server 300 through the mobile device 400.

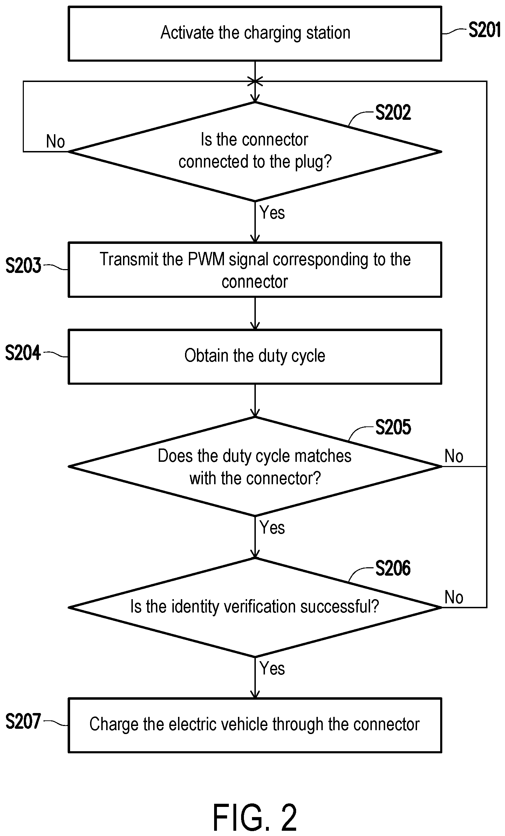

FIG. 2 is a flow chart of an AC charging method for an electric vehicle according to an embodiment of the disclosure. The AC charging method may be implemented by the AC charging system 10 shown in FIG. 1. In step S201, the charging station 100 may be activated.

In step S202, the controller 110 of the charging station 100 may detect a voltage of the connector 141 to determine whether the connector 141 is connected (or electrically coupled) to the plug 250 of the electric vehicle 200. If the controller 110 detects that connector 141 is connected to the plug 250, step S203 is executed. If the controller 110 does not detect that the connector 141 is connected to the plug 250, step S202 is executed again.

Specifically, when the connector 141 is not connected to any load, the controller 110 may output a signal with a first voltage (e.g., 12V) through the CP pin of the connector 141. Therefore, if the controller 110 detects that a voltage of the CP pin of the connector 141 is maintained at the first voltage, the controller 110 may determine that the connector 141 has not been connected to any load. After a user inserts the connector 141 into the plug 250 of the electric vehicle 200, the connector 141 may be connected to a circuit of the battery 240. A voltage dividing resistor in the circuit of the battery 240 may convert the voltage of the connector 141 from the first voltage to a second voltage (e.g., 9V) that is less than the first voltage. The controller 110 may determine that the connector 141 is connected to the plug 250 after detecting that the voltage of the connector 141 is converted to the second voltage.

In step S203, the controller 110 may transmit the PWM signal corresponding to the connector 141 to the electric vehicle 200 through the connector 141. Specifically, during a time period, the PWM signal output by the connector 140 in step S203 may be used to identify the single matching connector 140. For example, the PWM signal output by the connector 141 may have a duty cycle for identifying the connector 141, and the PWM signal output by the connector 142 may have a duty cycle for identifying the connector 142. If the controller 110 outputs the PWM signal through the connector 141 and outputs the PWM signal through the connector 142 during the same time period, the two PWM signals may be different. For example, the two PWM signals may have different duty cycles or amplitudes. On the other hand, if the controller 110 outputs the PWM signal through the connector 141 and outputs the PWM signal through the connector 142 during different time periods, the two PWM signals may be the same (for example, the two PWM signals may have the same duty cycle or amplitude respectively) or different (for example, the two PWM signals may have different duty cycles or amplitudes respectively).

In step S204, the ECU 210 may receive the PWM signal from the connector 141 through the plug 250, and detect the PWM signal to obtain the duty cycle of the PWM signal.

In step S205, the AC charging system 10 may determine whether the duty cycle of the PWM signal obtained by the electric vehicle 200 matches with the connector 141, and then automatically determine whether the connector connected to the plug 250 is the plug 141. If the duty cycle matches with the connector 141, step S206 is executed. If the duty cycle does not match with the connector 141, step S202 is executed again.

In an embodiment, the electric vehicle 200 may determine whether the duty cycle obtained by the electric vehicle 200 matches with the connector 141. Specifically, the controller 110 of the charging station 100 may broadcast a wireless signal associated with the connector 141 and the PWM signal output by the connector 141 through the transceiver 130. The ECU 210 may receive the wireless signal through the transceiver 230 and obtain relevant information about the connector 141 and the PWM signal thereof from the wireless signal. The ECU 210 may determine whether the duty cycle of the PWM signal in the wireless signal matches with the duty cycle of the PWM signal received by the plug 250. If the two duty cycles match, the ECU 210 may determine that the PWM signal received by the plug 250 matches with the PWM signal output by the connector 141. The ECU 210 may communicate with the charging station 100 through the transceiver 230 (e.g., through a Bluetooth communication protocol), and transmit a command to the charging station 100 to notify the charging station 100 that the connector 141 has been connected to the electric vehicle 200. On the other hand, if the two duty cycles do not match, the ECU 210 may determine that the PWM signal received by the plug 250 does not match with the PWM signal output by the connector 141. The ECU 210 may communicate with the charging station 100, and transmit the command to the charging station 100 to notify the charging station 100 that the connector connected to the electric vehicle 200 is not the connector 141.

The steps executed by the electric vehicle 200 in the above embodiment may also be executed by the mobile device 400. Specifically, the electric vehicle 200 may communicate with the charging station 100 through the mobile device 400. After the ECU 210 obtains the duty cycle of the PWM signal input to the plug 250, the ECU 210 may transmit the obtained duty cycle to the mobile device 400. The mobile device 400 may receive the wireless signal broadcast by the charging station 100, and determine whether the duty cycle from the ECU 210 matches with the PWM signal output by the connector 141 according to the wireless signal. If the duty cycle from the electric vehicle 200 matches with the PWM signal output by the connector 141, the mobile device 400 may communicate with the charging station 100 (e.g., through the Bluetooth communication protocol) to notify the charging station 100 that the connector 141 has been connected to the electric vehicle 200. On the other hand, if the duty cycle from the electric vehicle 200 does not match with the PWM signal output by the connector 141, the mobile device 400 may communicate with the charging station 100 to notify the charging station 100 that the connector connected to the electric vehicle 200 is not the connector 141.

In an embodiment, the cloud server 300 may determine whether the duty cycle obtained by the electric vehicle 200 matches with the connector 141. Specifically, the ECU 210 of the electric vehicle 200 may upload the obtained duty cycle to the cloud server 300 through the transceiver 230, or the ECU 210 may transmit the obtained duty cycle to the mobile device 400 through the transceiver 230, so as to upload the duty cycle to the cloud server 300 through the mobile device 400. The processor 310 of the cloud server 300 may receive the duty cycle from the electric vehicle 200 through the transceiver 330. On the other hand, the processor 310 may communicate with the charging station 100 through the transceiver 330, and obtain the information associated with the PWM signal output by the connector 141 from the charging station 100. The duty cycle of the PWM signal output by the connector 141 may be configured by the controller 110 or by the cloud server 300. The processor 310 may determine whether the duty cycle from the electric vehicle 200 matches with the PWM signal output by the connector 141, and may transmit a determination result to the charging station 100.

In step S206, the charging station 100 or the cloud server 300 may perform identity verification on the electric vehicle 200. If the identity verification is successful, step S207 is executed. If the identity verification fails, step S202 is executed again.

In an embodiment, after the electric vehicle 200 or the mobile device 400 communicates with the charging station 100 and notifies the charging station 100 that the electric vehicle 200 has been connected to the connector 141, the controller 110 of the charging station 100 may perform the identity verification on the electric vehicle 200. For example, the controller 110 may receive user information associated with the electric vehicle 200 from the electric vehicle 200 or the mobile device 400. The user information includes, for example, account numbers, passwords, or payment information. The controller 100 may compare whether the user information matches with data in a database, thereby determining whether the identity verification on the electric vehicle 200 is successful. The database is stored, for example, in the storage medium 120 of the charging station 100 or the storage medium 320 of the cloud server 300. If the charging station 100 determines that the identity verification on the electric vehicle 200 is successful, the controller 110 of the charging station 100 may charge the electric vehicle 200 through the connector 141 in step S207. If the charging station 100 determines that the identity verification on the electric vehicle 200 fails, the controller 110 may not charge the electric vehicle 200.

In an embodiment, after the cloud server 300 determines that the duty cycle from the electric vehicle 200 matches with the PWM signal output by the connector 141, the processor 310 of the cloud server 300 may communicate with the electric vehicle 200 or the mobile device 400 through the transceiver 330 to perform the identity verification on the electric vehicle 200. For example, the processor 310 may receive the user information associated with the electric vehicle 200 from the electric vehicle 200 or the mobile device 400. The user information includes, for example, the account numbers, the passwords, or the payment information. The processor 310 may compare whether the user information matches with the data in the database, thereby determining whether the identity verification on the electric vehicle 200 is successful. The database is, for example, stored in the storage medium 320 of the cloud server 300. If the cloud server 300 determines that the identity verification on the electric vehicle 200 is successful, the processor 310 of the cloud server 300 may transmit the command to the charging station 100 through the transceiver 330 in step S207. The controller 110 of the charging station 100 may charge the electric vehicle 200 through the connector 141 according to the command. If the cloud server 300 determines that the identity verification on the electric vehicle 200 fails, the cloud server 300 may not instruct the charging station 100 to charge the electric vehicle 200.

In an embodiment, the charging station 100 may output a preconfigured PWM signal through the connector 141 to charge the electric vehicle 200. The preconfigured PWM signal used for charging may be the same as (for example, the two PWM signals may have the same duty cycle or amplitude respectively) or different from (for example, the two PWM signals may have different duty cycles or amplitudes respectively) the PWM signal (i.e., the PWM signal used to identify the connector 141) output by the controller 110 in step S203. Table 1 is an example of the preconfigured PWM signal for charging. A voltage of the PWM signal is, for example, 6V.

**Table 1**

| Duty cycle (%) | Charging current (A) |
|---|---|
| 50% | 30A |
| 40% | 24A |
| 30% | 18A |
| 20% | 12A |
| 10% | 6A |

In an embodiment, when the electric vehicle 200 is ready to be charged, the voltage dividing resistor in the circuit of the battery 240 may convert the voltage of the connector 141 from the second voltage (e.g., 9V) to a third voltage (e.g., 6V) that is less than the second voltage. The controller 110 may start charging the electric vehicle 200 after detecting that the voltage of the connector 141 is converted to the third voltage. In addition, the controller 110 may determine that the connector 141 is no longer connected to the plug 250 or the charging of the electric vehicle 200 has been completed after the voltage of the connector 141 is converted from the third voltage to other voltages (e.g., 9V). Accordingly, the controller 110 may stop charging the electric vehicle 200 through the connector 141.

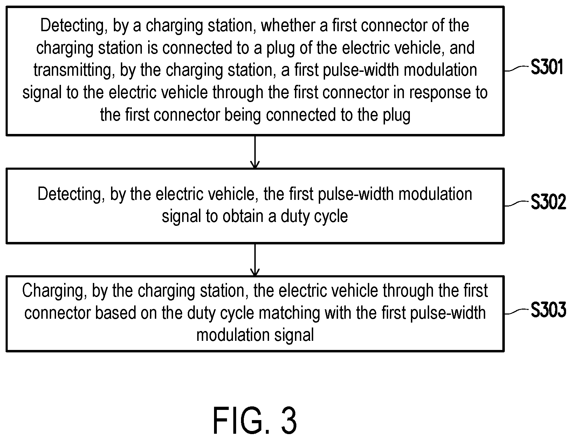

FIG. 3 is a flow chart of another AC charging method for an electric vehicle according to an embodiment of the disclosure. The AC charging method may be implemented by the AC charging system 10 shown in FIG. 1. In step S301, it is detected, by a charging station, whether a first connector of the charging station is connected to a plug of the electric vehicle, and a first pulse-width modulation signal is transmitted by the charging station to the electric vehicle through the first connector in response to the first connector being connected to the plug. In step S302, it is detected, by the electric vehicle, the first pulse-width modulation signal to obtain a duty cycle. In step S303, the electric vehicle is charged by the charging station through the first connector based on the duty cycle matching with the first pulse-width modulation signal.

Based on the above, the charging station of the AC charging system in the disclosure may transmit the PWM signal for identifying the connector to the electric vehicle after detecting that the electric vehicle has been connected to the charging station. The electric vehicle may detect the duty cycle of the PWM signal. The AC charging system may determine the connector connected to the electric vehicle based on a detection result of the duty cycle of the electric vehicle, and then charge the electric vehicle through the connector. Compared to a connector of a conventional AC charging station, which requires the user to operate the mobile phone to input the information to the control system of the electric station before it may be activated, the AC charging system in the disclosure may automatically determine the connector that is required to be activated based on the detection result of the PWM signal by the electric vehicle, thereby charging the electric vehicle through the connector. Therefore, the electric vehicle in the disclosure saves a lot of time for the user.

## Claims

1. An AC charging system (10) for an electric vehicle, **characterised in that**, comprising:
a charging station (100) comprising a first connector (141); and
an electric vehicle (200) comprising a plug (250), wherein
the charging station (100) detects whether the first connector (141) is connected to the plug (250), and transmits a first pulse-width modulation signal to the electric vehicle (200) through the first connector (141) in response to the first connector (141) being connected to the plug (250), wherein
the electric vehicle (200) detects the first pulse-width modulation signal to obtain a duty cycle, wherein
the charging station (100) charges the electric vehicle (200) through the first connector (141) based on the duty cycle matching with the first pulse-width modulation signal.

2. The AC charging system (10) according to claim 1, further comprising:
a cloud server (300) communicatively connected to the electric vehicle (200) and the charging station (100), wherein
the electric vehicle (200) uploads the duty cycle to the cloud server (300), wherein
the cloud server (300) transmits a command to the charging station (100) in response to the duty cycle matching with the first pulse-width modulation signal, wherein
the charging station (100) charges the electric vehicle (200) through the first connector (141) according to the command.

3. The AC charging system (10) according to claim 2, wherein
the cloud server (300) communicates with the electric vehicle (200) in response to the duty cycle matching with the first pulse-width modulation signal to perform identity verification on the electric vehicle (200), wherein
the cloud server (300) transmits the command to the charging station (100) in response to the identity verification being successful.

4. The AC charging system (10) according to claim 2, wherein
the electric vehicle (200) communicates with the cloud server (300) through a mobile device (400).

5. The AC charging system (10) according to claim 1, wherein
the charging station (100) broadcasts a wireless signal associated with the first pulse-width modulation signal, wherein
the electric vehicle (200) determines that the duty cycle matches with the first pulse-width modulation signal according to the wireless signal to be communicatively connected to the charging station (100) accordingly, wherein
in response to the electric vehicle (200) being communicatively connected to the charging station (100), the charging station (100) charges the electric vehicle (200) through the first connector (141).

6. The AC charging system (10) according to claim 5, wherein
in response to the electric vehicle (200) being communicatively connected to the charging station (100), the charging station (100) performs identity verification on the electric vehicle (200), wherein
in response to the identity verification being successful, the charging station (100) charges the electric vehicle (200).

7. The AC charging system (10) according to claim 5, wherein
the electric vehicle (200) communicates with the charging station (100) through a mobile device (400).

8. The AC charging system (10) according to claim 1, wherein the charging station (100) further comprises:
a second connector (142), wherein the charging station (100) transmits a second pulse-width modulation signal different from the first pulse-width modulation signal through the second connector (142).

9. The AC charging system (10) according to claim 1, wherein
the charging station (100) transmits a third pulse-width modulation signal to the electric vehicle (200) through the first connector (141) to charge the electric vehicle (200), wherein the third pulse-width modulation signal is different from the first pulse-width modulation signal.

10. The AC charging system (10) according to claim 1, wherein the first connector (141) comprises a control pilot pin for transmitting a pulse-width modulation signal.

11. An AC charging method for an electric vehicle (200), **characterised in that**, comprising:
detecting, by a charging station (100), whether a first connector (141) of the charging station (100) is connected to a plug (250) of the electric vehicle (200), and transmitting, by the charging station (100), a first pulse-width modulation signal to the electric vehicle (200) through the first connector (141) in response to the first connector (141) being connected to the plug (250);
detecting, by the electric vehicle (200), the first pulse-width modulation signal to obtain a duty cycle; and
charging, by the charging station (100), the electric vehicle (200) through the first connector (141) based on the duty cycle matching with the first pulse-width modulation signal.

12. The AC charging method according to claim 11, wherein charging, by the charging station (100), the electric vehicle (200) through the first connector (141) based on the duty cycle matching with the first pulse-width modulation signal comprises:
uploading, by the electric vehicle (200), the duty cycle to a cloud server (300);
transmitting, by the cloud server (300), a command to the charging station (100) in response to the duty cycle matching with the first pulse-width modulation signal; and
charging, by the charging station (100), the electric vehicle (200) through the first connector (141) according to the command.

13. The AC charging method according to claim 12, wherein transmitting, by the cloud server (300), the command to the charging station (100) in response to the duty cycle matching with the first pulse-width modulation signal comprises:
communicating, by the cloud server (300), with the electric vehicle (200) in response to the duty cycle matching with the first pulse-width modulation signal to perform identity verification on the electric vehicle (200); and
transmitting, by the cloud server (300), the command to the charging station (100) in response to the identity verification being successful.

14. The AC charging method according to claim 12, further comprising:
communicating, by the electric vehicle (200), with the cloud server (300) through a mobile device (400).

15. A charging station (100), **characterised in that**, comprising:
a controller (110); and
a first connector (141) coupled to the controller (110), wherein
the controller (110) detects whether the first connector (141) is connected to a plug (250) of an electric vehicle (200), and transmits a first pulse-width modulation signal to the electric vehicle (200) through the first connector (141) in response to the first connector (141) being connected to the plug (250), wherein
the controller (110) receives a command to determine that a duty cycle matches with the first pulse-width modulation signal, and charges the electric vehicle (200) through the first connector (141) based on the duty cycle and the first pulse-width modulation signal.
